# EUROPEAN PATENT APPLICATION

(11) **EP 4 542 057 A1**
(43) Date of publication of application: **23.04.2025**
(21) Application number: 24206668.6
(22) Date of filing: 15.10.2024
(51) Int. Cl.: F15B 20/00, F15B 19/00, F15B 11/042

(54) **PARALLEL ELECTROHYDRAULIC SERVO VALVE CONTROLLED ACTUATOR WITH FAILURE ACCOMMODATION**

(30) Priority: 19.10.2023 US 202318381737
(71) Applicant: Hamilton Sundstrand Corporation, Charlotte, NC 28217-4578 (US)
(72) Inventor: CORETTO, August M., Windsor, CT, 06095 (US); PERRELLI, Frank, East Haven, CT, 06512 (US)
(74) Representative: Dehns

(57) **Abstract**

A system includes a first electrohydraulic servo valve, EHSV (102), configured to be in fluid communication with a pressure supply (104) and with a pressure return (106). The first EHSV (102) includes a first actuator extend line (114) and a first actuator retract line (112). A second EHSV (116) is configured to be in fluid communication with the pressure supply (104) and with the pressure return (106). The second EHSV (116) includes a second actuator extend line and a second actuator retract line. An actuator includes an extend chamber (126) in fluid communication with both of the first and second extend actuator lines, and a retract chamber (124) in fluid communication with both of the first and second retract actuator lines for extending an end effector when the first and second EHSVs (102, 116) pressurize the extend chamber (126), and for retracting the end effector when the first and second EHSVs (102, 116) pressurize the retract chamber (124).

## Description

### BACKGROUND

### 1. Field

The present disclosure relates to hydraulic controls, and more particularly to hydraulic control of end effectors such as those used with actuators aboard aircraft.

### 2. Description of Related Art

Traditionally, an effector actuator required two full sized electrohydraulic servo valves (EHSVs) each sized for full capability on its own. One EHSV was for normal operation, and the other was for backup. The switch between the normal EHSV and the backup EHSV was via a transfer valve and a transfer EHSV/solenoid. Normal operation occurred with only the one active EHSV. In the event of failure of that EHSV, control could be transferred to the backup EHSV.

The conventional techniques have been considered satisfactory for their intended purpose. However, there is an ever present need for improved systems and methods for backing up EHSVs and controlling actuators. This disclosure provides a solution for this need.

### SUMMARY

A system includes a first electrohydraulic servo valve (EHSV) configured to be in fluid communication with a pressure supply and with a pressure return. The first EHSV includes a first actuator extend line and a first actuator retract line and is operatively connected to pressurize one of the first actuator extend line or the first actuator retract line. A second EHSV is configured to be in fluid communication with the pressure supply and with the pressure return. The second EHSV includes a second actuator extend line and a second actuator retract line and is operatively connected to pressurize one of the second actuator extend line or the second actuator retract line. An actuator includes an extend chamber in fluid communication with both of the first and second extend actuator lines, and a retract chamber in fluid communication with both of the first and second retract actuator lines for extending an end effector when the first and second EHSVs pressurize the extend chamber, and for retracting the end effector when the first and second EHSVs pressurize the retract chamber.

The first actuator extend line and the second actuator extend line can join into a shared actuator extend line that connects in fluid communication with the extend chamber of the actuator. The first actuator retract line and the second actuator retract line can join into a shared actuator retract line that connects in fluid communication with the retract chamber of the actuator.

A first transfer valve can be connected in fluid communication with the first EHSV via the first extend actuator line and via the first retract actuator line. The first transfer valve can be configured to connect the first EHSV in fluid communication with the actuator in a normal operation mode of the first EHSV, and to disconnect the first EHSV from fluid communication with the actuator with the first EHSV in a non-operational mode. The first transfer valve can include a piston configured in a first position to allow flow through the first actuator extend line and to allow flow through the first actuator retract line, and in a second position to block flow through the first actuator extend line and to block flow through the first actuator retract line.

A second transfer valve can be connected in fluid communication with the second EHSV via the second extend actuator line and via the second retract actuator line. The second transfer valve can be configured to connect the second EHSV in fluid communication with the actuator in a normal operation mode of the second EHSV, and to disconnect the second EHSV from fluid communication with the actuator with the second EHSV in a non-operational mode. The second transfer valve can include a piston configured in a first position to allow flow through the second actuator extend line and to allow flow through the second actuator retract line, and in a second position to block flow through the second actuator extend line and to block flow through the second actuator retract line.

A first solenoid valve can be operatively connected to actuate the first transfer valve. The first solenoid valve can be in fluid communication with an actuation port of the first transfer valve, and with the pressure supply and the pressure return for selectively pressurizing/depressurizing the actuation port of the first transfer valve.

A second solenoid valve can be operatively connected to actuate the second transfer valve. The second solenoid valve can be in fluid communication with an actuation port of the second transfer valve, and with the pressure supply and the pressure return for selectively pressurizing/depressurizing the actuation port of the second transfer valve.

A controller can be operatively connected to control the first and second EHSVs to control the actuator in the normal operation mode. The controller can be operatively connected to control the first solenoid valve to disconnect the first EHSV from the actuator with the first EHSV in the non-operational mode. The controller can be operatively connected to control the second solenoid valve to disconnect the second EHSV from the actuator with the second EHSV in the non-operational mode. The controller can be configured to disable first EHSV and continue operating the actuator at reduced power using only the second EHSV. The controller can be configured to lock the actuator in over pressure event during failure of first EHSV. The controller can be configured to disable the second EHSV and continue operating the actuator at reduced power using only the first EHSV. The controller can be configured to lock the actuator in over pressure event during failure of second EHSV.

A method includes using two parallel electrohydraulic servo valves EHSVs to move an actuator during a normal operation mode. The method includes upon failure of one of the EHSVs, continuing to move the actuator with a functional one of the EHSVs in a backup mode.

Continuing to move the actuator can include disconnecting the failed one of the EHSVs from fluid communication with the actuator. Disconnecting the failed one of the EHSVs can include using a first transfer valve dedicated to the failed EHSV to disconnect an actuator extend line and an actuator retract line to block fluid communication between the failed EHSV and the actuator. Using the transfer valve can include controlling the transfer valve with a solenoid valve. The method can include locking the actuator in position upon detection of an overpressure event. The method can include selecting one of the two parallel EHSVs to solely drive the actuator, were supply pressure is sufficiently high to meet slew flow demands and force output.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the parallel electrohydraulic servo valves (EHSVs) and their respective transfer valves and solenoid valves; and
Fig. 2 is a schematic view of a portion of the system of Fig. 1, showing the internals of the transfer valves.

### DETAILED DESCRIPTION OF THE PREFERRED EMBODIMENTS

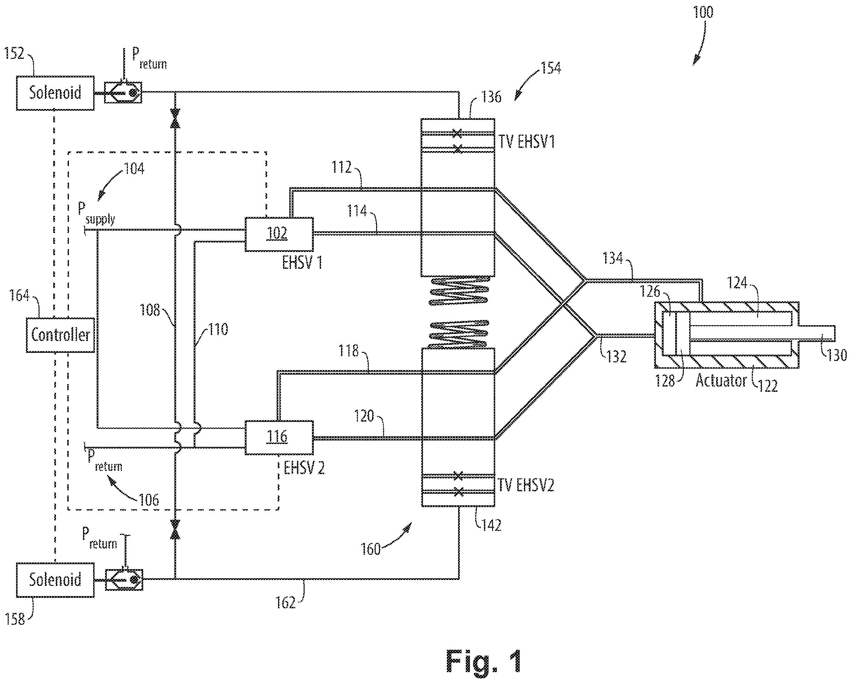

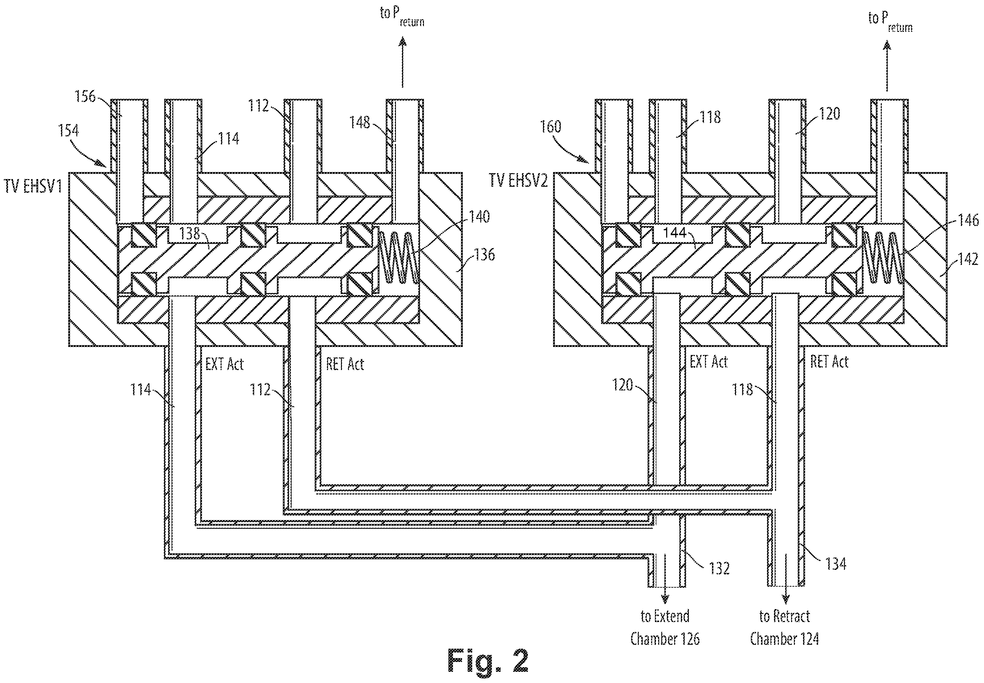

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to reduce actuator weight, envelope, and leakage for a component traditionally requiring dual electrohydraulic servo valves (EHSVs), a transfer valve, and a transfer EHSV.

The system includes an effector actuator that is controlled simultaneously by two relatively small EHSV's operating hydraulically and electrically in parallel. In normal operation, each EHSV flows through its own dedicated 2-position transfer valve to the actuator extend and retract cavities. In the event of an EHSV failure, the respective transfer valve for the failed EHSV can be commanded closed to allow the other still-functioning EHSV to control the actuator at a limited rate.

The system 100 includes a first electrohydraulic servo valve (EHSV) 102 in fluid communication with a pressure supply 104 and with a pressure return 106 via respective lines 108, 110. The first EHSV 102 includes a first actuator extend line 114 and a first actuator retract line 112 and is operatively connected to pressurize one of the first actuator extend line 114 or the first actuator retract line 112. A second EHSV 116 is connected to the lines 110, 108 to be in fluid communication with the pressure supply 104 and with the pressure return 106. The second EHSV 116 includes a second actuator extend line 120 and a second actuator retract line 118 and is operatively connected to pressurize one of the second actuator extend line 120 or the second actuator retract line 118. The actuator 122 includes an extend chamber 126 in fluid communication with both of the first and second extend actuator lines 114, 120, and a retract chamber 124 in fluid communication with both of the first and second retract actuator lines 112, 118. The first actuator extend line 114 and the second actuator extend line 120 join into a shared actuator extend line 132 that connects in fluid communication with the extend chamber 126 of the actuator 122. The first actuator retract line 112 and the second actuator retract line 118 join into a shared actuator retract line 134 that connects in fluid communication with the retract chamber 124 of the actuator 122.

A piston 128 separates between the retract and extend chambers 124, 126 with an end effector 130 connected to the piston 128, for extending the end effector 130 when the first and second EHSVs pressurize the extend chamber 126, and for retracting the end effector 130 when the first and second EHSVs pressurize the retract chamber 124. The end effector 130 could be connected to control surfaces, linkages for engine control, landing gear, or the like, aboard and aircraft.

A first transfer valve 136 is connected in fluid communication with the first EHSV 102 via the first extend actuator line 112 and via the first retract actuator line 114. The first transfer valve 136 is configured to connect the first EHSV 102 in fluid communication with the actuator 122 through the lines 112, 114 in a normal operation mode of the first EHSV 102, and to disconnect the first EHSV 102 from fluid communication with the actuator 122 (by blocking both lines 112, 114) with the first EHSV 102 in a non-operational mode, e.g. if the first EHSV 102 fails. As shown in Fig. 2, the first transfer valve 136 includes a piston 138 configured in a first position as shown in Fig. 2 to allow flow through the first actuator extend line 114 and to allow flow through the first actuator retract line 112, and in a second position (with the piston 136 shifted to the right against the spring 140 relative to the position shown in Fig. 2) to block flow through both of the first actuator extend line 114 and to block flow through the first actuator retract line 112 to take the first EHSV 102 off line in the event of its failure. A return line 148 allows for the fluid to drain as needed from the first transfer valve 136 to allow movement of the piston 138 to the second position.

With reference again to Fig. 1, a second transfer valve 142 is connected in fluid communication with the second EHSV 116 via the second extend actuator line 120 and via the second retract actuator line 118. The second transfer valve 142 is configured to connect the second EHSV 116 in fluid communication with the actuator 122 in a normal operation mode of the second EHSV 116, and to disconnect the second EHSV 116 from fluid communication with the actuator 122 with the second EHSV 116 in a non-operational mode, e.g. upon failure of the second EHSV 116. As shown in Fig. 2, the second transfer valve 142 includes a piston 144 configured in a first position (shown in Fig. 2) to allow flow through the second actuator extend line 118 and to allow flow through the second actuator retract line 120, and in a second position (with the piston 144 shifted to the right against the spring 146 relative to the position shown in Fig. 2) to block flow through the second actuator extend line 118 and to block flow through the second actuator retract line 120. A return line 150 allows for the fluid to drain as needed from the second transfer valve 142 to allow movement of the piston 144 to the second position.

With reference again to Fig. 1, a first solenoid valve 152 is operatively connected to actuate the first transfer valve 136. The first solenoid valve 152 is in fluid communication with an actuation port 154 of the first transfer valve 136, via line 156. The first solenoid valve 152 is connected in fluid communication with the pressure supply 104 and the pressure return 106 for selectively pressurizing/depressurizing the actuation port 154 of the first transfer valve 136, i.e. to push the piston 138 to the right as oriented in Fig. 2. A second solenoid valve 158 is operatively connected to actuate the second transfer valve 142. The second solenoid valve 158 is connected in fluid communication with an actuation port 160 of the second transfer valve 142 via a line 162. The second solenoid valve 158 is connected in fluid communication with the pressure supply 104 and the pressure return 106 for selectively pressurizing/depressurizing the actuation port 160 of the second transfer valve 142.

A controller 164 is operatively connected to control the first and second EHSVs 102, 116 to control the actuator 122 in the normal operation mode. The controller 164 is operatively connected to control the first solenoid valve 152 to disconnect the first EHSV 102 from the actuator 122 with the first EHSV 102 in the non-operational mode, i.e. upon failure of the first EHSV 102. The controller 164 is configured to disable first EHSV 102 and continue operating the actuator 122 at reduced power using only the second EHSV 116. The controller 164 is configured to lock the actuator 122 in the event of an over pressure at the actuator that would otherwise overpower the second EHSV 112 with the first EHSV 102 failed. The controller 164 is operatively connected to control the second solenoid valve 158 to disconnect the second EHSV 116 from the actuator 122 with the second EHSV 116 in the non-operational mode, i.e. upon failure of the second EHSV 116. The controller 164 is configured to disable the second EHSV 116 and continue operating the actuator 122 at reduced power using only the first EHSV 102, and to lock the actuator 122 in the event of over pressure in the actuator 122 during failure of second EHSV 116.

A method includes using two parallel electrohydraulic servo valves EHSVs 102, 116 to move an actuator 122 during a normal operation mode. The method includes, upon failure of one of the EHSVs 102, 116, continuing to move the actuator 122 with the remaining functional one of the EHSVs 102 or 116 in a backup mode.

Continuing to move the actuator 122 includes disconnecting the failed one of the EHSVs 102 or 116 from fluid communication with the actuator, e.g. using the solenoids 152, 158 and transfer valves 136, 142. Disconnecting the failed one of the EHSVs 106 or 116 includes using a first transfer valve 136 or 142 dedicated to the failed EHSV to disconnect an actuator extend line 114 or 120 and an actuator retract line 112 or 118 to block fluid communication between the failed EHSV and the actuator 122. Using the transfer valve 136 or 142 includes controlling the transfer valve 136 or 142 with a solenoid valve 152 or 158. The method includes locking the actuator 122 in position upon detection of an overpressure event in the actuator 122.

Systems and methods as disclosed herein can also be used to selectively reduce operating capabilities based on engine conditions, e.g., in cases were supply pressure is sufficiently high to meet slew flow demands and force output, the controller 164 can select one of the two EHSVs 106, 116 to solely drive the actuator 122. This can have beneficial effects on stability of the system as well as potentially limit slew rates and position disturbances during run away events for an EHSV. There is also the potential to reduce shutdown slew rates when depowering the system if a specific aircraft powered circuit is used to control the solenoids 152, 158 by keeping one of the EHSVs 106, 116 closed via the corresponding transfer valve 136, 142.

Systems and methods as disclose herein provide potential benefits including the following. They allow each EHSV to be smaller, which reduces weight, envelope and fuel leakage. In a failure of one EHSV, the effector can still have control, but at a slower rate of travel due to only having a single, smaller EHSV available. These systems and methods allow for closing both transfer valves 136, 142 to hold the actuator 122 in place when load exceeds pressure available. The two EHSVs are each too small for full performance operation of the actuator on their own, but in parallel during normal operation, they provide for the full performance operation. Each transfer valve can be reduced in size relative to the old traditional transfer valve.

The methods and systems of the present disclosure, as described above and shown in the drawings, provide for reducing actuator weight, envelope, and leakage for a component traditionally requiring dual electrohydraulic servo valves (EHSVs), a transfer valve, and a transfer EHSV. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
a first electrohydraulic servo valve, EHSV (102), configured to be in fluid communication with a pressure supply (104) and with a pressure return (106), the first EHSV (102) including a first actuator extend line (114) and a first actuator retract line (112) and being operatively connected to pressurize one of the first actuator extend line (114) or the first actuator retract line (112);
a second EHSV (116) configured to be in fluid communication with the pressure supply (104) and with the pressure return (106), the second EHSV (116) including a second actuator extend line and a second actuator retract line and being operatively connected to pressurize one of the second actuator extend line or the second actuator retract line; and
an actuator (122) with an extend chamber (126) in fluid communication with both of the first and second extend actuator lines, and a retract chamber (124) in fluid communication with both of the first and second retract actuator lines for extending an end effector when the first and second EHSVs (102, 116) pressurize the extend chamber (126), and for retracting the end effector when the first and second EHSVs (102, 116) pressurize the retract chamber (124).

2. The system as recited in claim 1, further comprising a first transfer valve (136) connected in fluid communication with the first EHSV (102) via the first extend actuator line and via the first retract actuator line, the first transfer valve (136) being configured to connect the first EHSV (102) in fluid communication with the actuator in a normal operation mode of the first EHSV (102), and to disconnect the first EHSV (102) from fluid communication with the actuator with the first EHSV (102) in a non-operational mode.

3. The system as recited in claim 2, further comprising a second transfer valve (142) connected in fluid communication with the second EHSV (116) via the second extend actuator line and via the second retract actuator line, the second transfer valve (142) being configured to connect the second EHSV (116) in fluid communication with the actuator in a normal operation mode of the second EHSV (116), and to disconnect the second EHSV (116) from fluid communication with the actuator with the second EHSV (116) in a non-operational mode.

4. The system as recited in claim 3, further comprising a first solenoid valve (152) operatively connected to actuate the first transfer valve (136), wherein the first solenoid valve (152) is in fluid communication with an actuation port of the first transfer valve (136), and with the pressure supply (104) and the pressure return (106) for selectively pressurizing/depressurizing the actuation port of the first transfer valve (136).

5. The system as recited in claim 4, further comprising a second solenoid valve (158) operatively connected to actuate the second transfer valve (142), wherein the second solenoid valve (158) is in fluid communication with an actuation port of the second transfer valve (142), and with the pressure supply (104) and the pressure return (106) for selectively pressurizing/depressurizing the actuation port of the second transfer valve (142).

6. The system as recited in claim 5, further comprising a controller (164) operatively connected to control the first and second EHSVs to control the actuator in the normal operation mode.

7. The system as recited in claim 6, wherein the controller (164) operatively connected to control the first solenoid valve (152) to disconnect the first EHSV (102) from the actuator with the first EHSV (102) in the non-operational mode.

8. The system as recited in claim 7, wherein the controller (164) is operatively connected to control the second solenoid valve (158) to disconnect the second EHSV (116) from the actuator with the second EHSV (116) in the non-operational mode.

9. The system as recited in claim 8, wherein the first actuator extend line (114) and the second actuator extend line join into a shared actuator extend line that connects in fluid communication with the extend chamber (126) of the actuator, and wherein the first actuator retract line (112) and the second actuator retract line join into a shared actuator retract line that connects in fluid communication with the retract chamber (124) of the actuator.

10. The system as recited in claim 9, wherein the first transfer valve (136) includes a piston configured in a first position to allow flow through the first actuator extend line (114) and to allow flow through the first actuator retract line (112), and in a second position to block flow through the first actuator extend line (114) and to block flow through the first actuator retract line (112), and optionally wherein the second transfer valve (142) includes a piston configured in a first position to allow flow through the second actuator extend line and to allow flow through the second actuator retract line, and in a second position to block flow through the second actuator extend line and to block flow through the second actuator retract line.

11. The system as recited in claim 8, wherein the controller (164) is configured to disable first EHSV (102) and continue operating the actuator at reduced power using only the second EHSV (116), and optionally wherein the controller (164) is configured to lock the actuator in over pressure event during failure of first EHSV (102), and/or wherein the controller (164) is configured to disable the second EHSV (116) and continue operating the actuator at reduced power using only the first EHSV (102).

12. A method comprising:
using two parallel electrohydraulic servo valves, EHSVs (102, 116), to move an actuator (122) during a normal operation mode; and
upon failure of one of the EHSVs, continuing to move the actuator with a functional one of the EHSVs in a backup mode.

13. The method as recited in claim 12, wherein continuing to move the actuator includes disconnecting the failed one of the EHSVs from fluid communication with the actuator, and optionally wherein disconnecting the failed one of the EHSVs includes using a first transfer valve (136) dedicated to the failed EHSV to disconnect an actuator extend line and an actuator retract line to block fluid communication between the failed EHSV and the actuator, and optionally wherein using the transfer valve includes controlling the transfer valve with a solenoid valve.

14. The method as recited in claim 12 or 13, further comprising locking the actuator in position upon detection of an overpressure event.

15. The method as recited in any of claims 12-14, further comprising, selecting one of the two parallel EHSVs to solely drive the actuator, were supply pressure is sufficiently high to meet slew flow demands and force output.
